# FASCICULE DE BREVET EUROPEEN

(11) **EP 3 590 847 B1**
(45) Date de publication et mention de la délivrance du brevet: **19.08.2020**
(21) Numéro de dépôt: 19178811.6
(22) Date de dépôt: 06.06.2019
(51) Int. Cl.: B64D 45/00, B64F 5/60, G01N 29/14

(54) **AÉRONEF ÉQUIPÉ D'UN SYSTÈME D'ESTIMATION DES PARAMÈTRES D'UN IMPACT**
LUFTFAHRZEUG, DAS MIT EINEM SYSTEM ZUM ABSCHÄTZEN DER PARAMETER EINES AUFPRALLS AUSGESTATTET IST
AIRCRAFT PROVIDED WITH A SYSTEM FOR ESTIMATING PARAMETERS OF AN IMPACT

(30) Priorité: 02.07.2018 FR 1856096
(43) Date de publication de la demande: 08.01.2020
(73) Titulaire: Airbus (S.A.S.), 31700 Blagnac (FR)
(72) Inventeur: GENDRE, Didier, 31700 Blagnac Cedex (FR); GOUTAUDIER, Dimitri, 31700 Blagnac Cedex (FR)
(74) Mandataire: Gicquel, Olivier Yves Gérard

(56) Documents cités:
- EP-A1- 3 043 322
- KR-A- 20130 027 729
- A. CUSANO ET AL: "Experimental modal analysis of an aircraft model wing by embedded fiber Bragg grating sensors", IEEE SENSORS JOURNAL., vol. 6, no. 1, 1 février 2006 (2006-02-01) , pages 67-77, XP055580658, US ISSN: 1530-437X, DOI: 10.1109/JSEN.2005.854152

## Description

La présente invention concerne un aéronef équipé d'un système d'estimation des paramètres d'un impact.

Une pluralité de véhicules de services gravite autour d'un aéronef pendant les phases de ravitaillements ou de chargement/déchargement au sol. Il peut arriver que des parties des véhicules, comme des échelles ou des rampes, impactent la surface externe, dite peau, de l'aéronef.

La localisation et l'évaluation de la sévérité de l'impact est effectuée par des opérateurs lors d'opérations d'inspection du fuselage, soit par identification visuelle soit à l'aide de moyens d'inspection tels que des drones volants munis de dispositifs optiques pour inspecter le fuselage. A la suite de l'opération d'inspection, les opérateurs rédigent un rapport précis de l'événement et mettent en œuvre, éventuellement en fonction de la sévérité de l'impact, une opération de maintenance pour réparer la peau du fuselage.

Pour optimiser et accélérer les opérations d'inspection, il existe un besoin pour que les aéronefs puissent s'autodiagnostiquer après un impact afin de fournir des estimations précises sur la localisation et la sévérité de l'impact aux opérateurs. Ces derniers pourront alors procéder à des opérations d'inspections ciblées et efficaces de la peau de l'aéronef.

On connait du document EP3043322, un aéronef équipé d'un système d'analyse des paramètres d'un impact sur la peau qui comprend une pluralité d'accéléromètres arrangés en réseau maillé sur la peau de l'avion et qui sont configurés pour recueillir les ondes élastiques qui se propagent dans le matériau de la peau suite à un impact. Le système d'analyse présenté dans le document EP3043322 donne satisfaction, mais il pourrait être rendu plus efficace en fournissant des analyses des paramètres d'impacts qui sont plus robustes et plus rapidement.

L'invention a pour but de répondre en tout ou partie à ce besoin et concerne un aéronef équipé d'un système d'estimation des paramètres d'un d'impact tel que revendiqué à la revendication 1. L'invention concerne aussi un procédé d'estimation des paramètres d'un impact sur la peau d'un aéronef selon la revendication 6.

Les caractéristiques de l'invention mentionnées ci-dessus, ainsi que d'autres, apparaîtront plus clairement à la lecture de la description suivante d'un exemple de réalisation, ladite description étant faite en relation avec les figures jointes, parmi lesquels :
- la figure 1 est une vue d'un aéronef équipé d'un système d'estimation des paramètres d'un impact sur la peau de l'aéronef, selon un mode de réalisation de l'invention ;
- la figure 2 est une vue schématique du système d'estimation des paramètres d'un impact représenté à la figure 1 ;
- la figure 3 est une vue schématique des étapes d'un procédé d'estimation des paramètres - d'un impact sur la peau d'un aéronef mis en œuvre par le système représenté à la figure ;
- la figure 4 est une vue schématique de la peau sur laquelle sont fixés des capteurs du système d'estimation des paramètres d'un pour la mise en œuvre du procédé représenté à la figure 3 ;
- la figure 5 est une représentation de signaux émis par des capteurs du système d'estimation des paramètres d'un impact lors la mise en œuvre du procédé représenté à la figure 3 ; et
- la figure 6 est une vue similaire à la figure 1, d'un aéronef équipé d'un système d'estimation des paramètres d'un impact selon un autre mode de réalisation de l'invention .

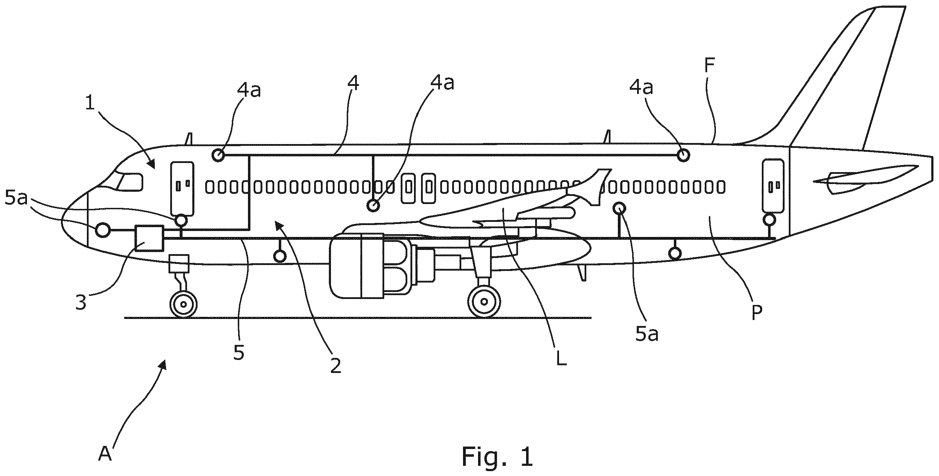

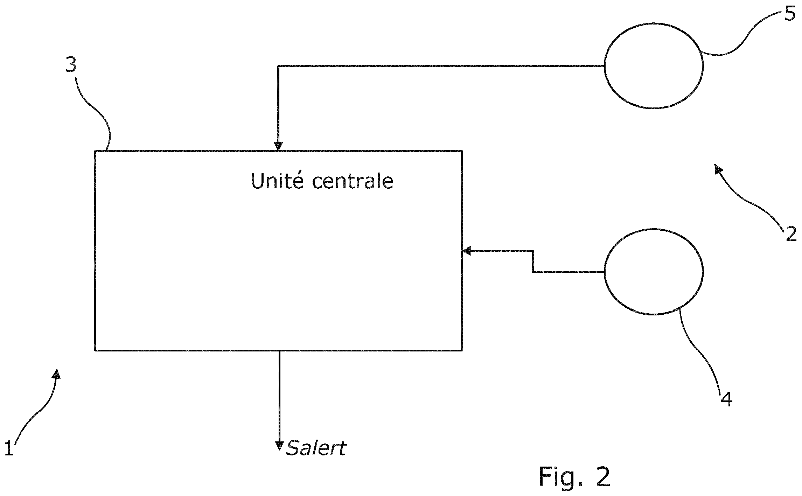

En référence avec les figures 1 et 2, un aéronef A comprend un fuselage F auquel sont rattachées des ailes L. Le fuselage F comme les ailes Ls, sont réalisés par l'assemblage de panneaux (non représentés), par exemple en matériaux composites, fixés à une structure métallique (non représentée) qui forme le squelette de l'aéronef A. Les panneaux forment la surface externe, ou peau P, de l'aéronef.

Un impact se produisant sur la peau P de l'aéronef A à un instant d'impact *t*₀ (correspondant à l'instant du contact d'un élément extérieur à l'aéronef avec la peau P), génère des ondes élastiques qui vont, à partir de la position du point d'impact *F*, se propager la peau P pendant un temps qui dépend des dimensions de l'aéronef A et de l'intensité I de l'impact puis se réfléchir aux frontières de l'aéronef avant de se superposer en modes de vibration amortis.

Selon l'invention, l'aéronef A est équipé d'un système d'évaluation des paramètres (position du point d'impact, intensité, durée, position du pic, dissymétrie du pic,... etc) d'un impact 1. Ce dernier comprend un réseau de capteurs 2 fixés aux panneaux (sur la face des panneaux tournée vers l'intérieur de l'aéronef) pour mesurer des données relatives aux impacts, et une unité centrale 3 connectée au réseau de capteurs 2 et configurée pour évaluer les paramètres d'un impact à partir des données du réseau de capteurs 2 et d'un modèle de réponse de la peau P à des excitations extérieures.

Le modèle de réponse de la peau est calculé à partir des propriétés modales de la peau P déterminées au moyen d'une analyse modale de la peau P réalisée expérimentalement, ou numériquement au moyen d'un modèle en éléments finis de la peau. Les propriétés modales de la peau P comprennent la matrice modale Φ de la peau, les fréquences propres, les déformées modales et amortissements modaux de certains modes de vibration de la peau, dit modes discriminants qui sont obtenus en calculant les déformées modales de la peau. Les modes discriminants sont les modes de vibrations de la peau P dont la contribution dans la réponse mesurée de la peau P à un impact caractérise le point d'impact *F*. Les modes discriminants de la peau P d'un aéronef A sont par exemple les 10 premiers modes de vibrations de l'aéronef, à des fréquences s'étendant de 0.7Hz à 10Hz.

Le réseau de capteur 2 comprend un premier ensemble de capteurs 4 et un second ensemble de capteurs 5. Les capteurs 4a ,5a des deux ensembles 4, 5 sont fixés à certains panneaux, sur leur face intérieure (c'est-à-dire la face orientée vers l'intérieur de l'aéronef). Les coordonnées de chaque capteur 4a, 5a, dans un référentiel lié à l'aéronef A, sont enregistrées dans une mémoire de l'unité centrale 3. Le premier ensemble de capteurs 4 fournit des données relatives aux ondes élastiques, et le second ensemble de capteurs 5 fournit des données relatives à la détection temporelle d'un instant impact sur la peau pour assister le premier ensemble de capteurs 4 dans la détermination de l'instant d'impact *t*₀.

Les données relatives aux ondes élastiques mesurées par le premier ensemble de capteurs 4 comprennent les données relatives aux ondes élastiques se propageant dans la peau P ainsi que les mesures vibratoires. Les mesures vibratoires sont des données relatives aux ondes élastiques lorsque ces dernières se superposent en ondes spatialement stationnaires, appelées modes de vibration, qui s'amortissent temporellement.

Les capteurs 4a du premier ensemble de capteurs 4 sont des capteurs de déplacements ou des accéléromètres. Les accéléromètres sont avantageux puisque le signal émis par un accéléromètre fixé à la peau P qui vibre consécutivement à un impact, a une amplitude amplifiée et un meilleur rapport signal/bruit, que ceux d'un signal émis par un capteur de déplacement pour les mêmes conditions.

Chaque capteur 4a du premier ensemble 4 est placé sur un point particulier, dit point neutre de la peau P qui ne vibre pas préférentiellement sur un mode discriminant de la peau (c.-à-d. que l'amplitude de la forme d'onde en ce point a une amplitude sensiblement uniforme, en valeur absolue, pour tous les modes discriminants). Le positionnement des capteurs 4a du premier ensemble 4 sur les points neutres renforce la robustesse et la précision de l'estimation des paramètres d'impact effectuée par l'unité centrale 3. Les coordonnées des points neutres de la peau P s'obtiennent en déterminant les points les plus proches des intersections des déformées modales des modes discriminants de la peau P.

Les capteurs 5a du second ensemble de capteurs 5 sont, par exemple, des capteurs de type piézoélectrique, à fréquence d'échantillonnage et sensibilité élevées, pour enregistrer des déformations de la peau P suite à la propagation d'une onde élastique dans cette dernière. En variante, les capteurs 5a du second ensemble de capteurs 5 sont des microphones.

Les capteurs 5a du second ensemble de capteurs 5 sont distribués sur la peau P de l'aéronef dans les zones qui sont statistiquement les plus impactées de la peau P de l'aéronef A. Les zones les plus impactées statistiquement par des impacts de véhicules /éléments extérieurs, sont la partie basse du fuselage (par exemple au niveau des portes des soutes à bagages), ou encore l'intrados de l'aile.

L'unité centrale 3, comprend de manière connu un processeur (non représenté) et des mémoires (non représentées) contenant des instructions exécutées par le processeur. L'unité centrale 3 traite en temps réels les informations du réseau de capteurs 2, et met en œuvre, un procédé d'estimation des paramètres d'un impact, utilisant les données fournies par le premier réseau de capteurs 4, dès lors qu'un impact a été détecté par le premier et/ou le second ensemble de capteurs 4,5. L'unité centrale 3 émet un signal d'alerte *Salert* à destination des opérateurs si l'intensité I de l'impact dépasse un seuil prédéterminé G caractéristique d'un endommagement de la peau P de l'aéronef A.

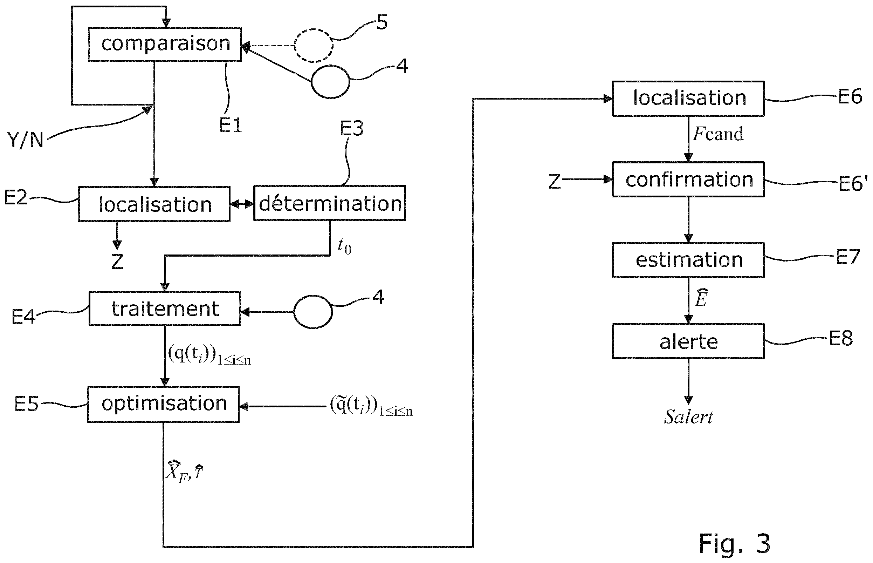

Un exemple du procédé d'estimation des paramètres d'un impact mis en œuvre par l'unité centrale 3 va être décrit en relation avec les figures 3 à 5, pour estimer des paramètres d'un impact sur l'intrados de l'aile L. Pour cet exemple, on considère que la peau P au niveau de l'intrados est une plaque pour laquelle trois modes discriminants ont été déterminés, que le premier ensemble de capteurs 4 comprend un unique capteur 4a et que le second ensemble de capteurs 5a comprend trois capteurs 5al,5a2, 5a3.

Pour cet exemple, l'hypothèse est prise que les mesures vibratoires peuvent être convenablement représentées par la réponse à un impact de forme demi-sinus et on utilise une loi d'impact dont les paramètres sont la position du point d'impact *F* sur la peau P, l'intensité d'impact I et la durée d'impact *T*. On considère que l'impact a lieu à proximité du capteur 4a3.

Dans une première étape du procédé, dite étape E1 de comparaison, l'unité centrale reçoit le signal S4a du capteur 4a du premier ensemble de capteurs 4 et les signaux *S*5*a*1, *S*5*a*2, *S*5*a*3 des capteurs 5al, 5a2, 5a3 du second ensemble de capteurs 5 et compare l'amplitude normalisée de chacun des signaux a un seuil prédéterminé K caractérisant un évènement anormal. Le but de cette comparaison est de filtrer les signaux représentatifs d'un événement normal comme, par exemple, une vibration de la peau suite à des vents violents, ou l'appui normal d'une passerelle aéroportuaire contre la peau de l'aéronef.

L'étape est de comparaison E1 est effectuée à intervalles de temps *Int*_{0...*m*} réguliers et successifs, par exemple toutes les 5 ou 10 secondes.

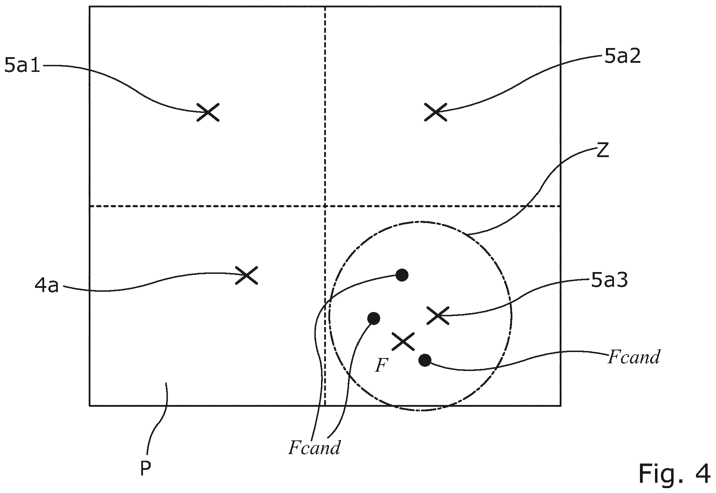

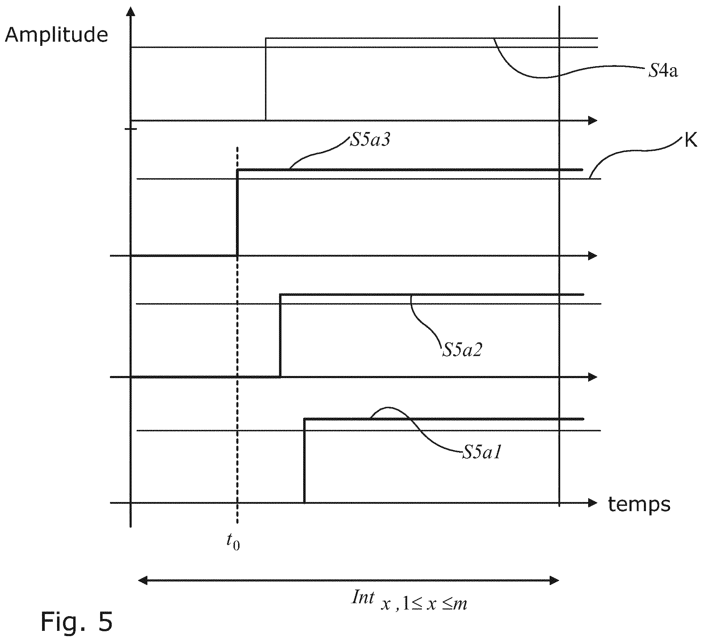

Si dans un intervalle de temps *Int_{x,1≤x≤m}*, un des signaux *S*4*a*, *S*5*a*2, *S*5*a*2, *S*5*a*3 des capteurs 4a,5a1,5a2,5a3 a une amplitude qui dépasse le seuil prédéterminé K (condition matérialisée par la référence Y/N à la figure 3), alors l'unité centrale 3 met en œuvre une étape E2 de localisation de zone d'impact dans laquelle cette dernière détermine une zone Z de la peau dans laquelle a eu lieu l'impact. Cette zone Z, représentée en pointillée à la figure 4, est centrée autour du capteur 5a3 ayant émis, en premier dans le temps de l'intervalle *Intₓ* considéré (voir figure 5), un signal *S*5*a*3 dont l'amplitude dépasse le seuil prédéterminé K.

Parallèlement à l'étape E2 de localisation de zone d'impact, l'unité centrale 3 met en œuvre une étape E3 de détermination de l'instant d'impact *t*₀ qui est le temps auquel le seuil prédéterminé K est dépassé pour la première fois dans l'intervalle *Intₓ* considéré, par l'amplitude d'un signal *S*4*a*3 issu du réseau de capteur 2 (voir figure 5). L'instant d'impact *t*₀ correspond au temps à partir duquel des ondes élastiques vont se propager dans la peau P à partir du point d'impact F et il constitue ainsi par le point temporel de départ pour l'analyse des signaux fournis par le premier ensemble de capteurs 4.

On notera que la dimension de la zone Z définie à l'étape E2 de localisation est une constante choisie arbitrairement. En variante, la dimension de la zone Z est fonction, avec des critères de correspondance prédéfinis, de l'amplitude, à l'instant d'impact *t*₀, du signal *S*4*a*3 du capteur 4a3 ayant émis, en premier dans l'intervalle de temps *Intₓ* considéré, un signal dont l'amplitude dépasse le seuil prédéterminé K.

Dans une étape E4 de traitement des mesures vibratoires, mise en œuvre après l'étape E3 de détermination d'instant d'impact *t*₀, l'unité centrale 3 reçoit uniquement le signal du capteur 4a du premier ensemble de capteurs 4 à partir d'un temps postérieur à l'instant d'impact *t*₀ et pendant à une durée limitée (par exemple une durée permettant une dizaine d'oscillations du mode discriminatoire de plus petite fréquence propre pour augmenter la rapidité de mise en œuvre du procédé par l'unité centrale 3. L'unité centrale 3, à l'issue de cette étape E4, dispose ainsi de *n* observations notées (*q*(*tᵢ*)_{1≤*i*≤*n*}, prises en des instants *tᵢ* = *i*Δ*t* avec Δ*t* la période d'échantillonnage du capteur 4a du premier ensemble 4

Optionnellement, et toujours dans le but de diminuer le nombre de données à traiter, l'unité centrale 3 met également en œuvre, à l'étape E4 de réception, un filtrage fréquentiel passe-bas du signal du capteur 4a du premier ensemble 4 pour en supprimer les composantes hautes fréquences, et notamment pour retirer les fréquences au-delà de la fréquence du mode discriminant le plus élevée.

Consécutivement à l'étape E4 de traitement des mesures vibratoires, l'unité centrale 3 met en œuvre une étape E5 d'optimisation pour déterminer une estimation *T̂* de la durée d'impact *T* et une estimation *X̂_{F}* (vecteur) des contributions *X_{F}* = (*X*₁ *X*₂ *X*₃) des trois modes discriminants dans la réponse liée au point d'impact F (les contributions des modes discriminants étant également appelé vecteur de participation modale). Ces estimations sont obtenues à partir d'un modèle mathématique de réponse (*q̃*(*tᵢ*))_{1≤*i*≤*n*} du capteur 4a du premier ensemble 4 à des excitations quelconques et à partir des observations obtenues (*q*(*tᵢ*))_{1≤*i*≤*n*} à l'étape E4 précédente. L'estimation *X̂_{F}* des contributions *X_{F}* = (*X*₁ *X*₂ *X*₃) des trois modes discriminants concentre des données permettant, après traitement adapté, de retrouver une estimation de la position du point d'impact *F* sur la peau P ainsi qu'une estimation Î de l'intensité d'impact I.

Le modèle mathématique de réponse du capteur 4a du premier ensemble de capteurs 4 à des excitations quelconques permet de prédire la réponse dudit capteur à une excitation donnée pour les paramètres (point d'impact *F*, l'intensité d'impact *f*, durée d'impact *T*) de la loi d'impact choisie. Le modèle mathématique est déterminé à partir de la méthode de superposition modale qui décrit la réponse de la peau P à une excitation quelconque comme étant une superposition des modes de vibrations amortis de la peau.

Dans l'étape E5 d'estimation, l'unité centrale 3 met en œuvre, par exemple, la méthode des moindres carrés non-linéaires pour minimiser l'écart entre le modèle mathématique de réponse (*q̃*(*tᵢ*))_{1≤*i*≤*n*} du capteur 4a du premier ensemble de capteurs 4 et les observations (*q*(*tᵢ*))_{1≤*i*≤*n*}. La méthode employée a pour but de calculer les valeurs des paramètres qui appliquées au modèle mathématique de réponse du capteur 4a, reproduisent au mieux les observations (*q*(*tᵢ*))_{1≤*i*≤*n*}.

Suite à l'étape E5, et dans une étape E6 de localisation de point d'impact *F*, l'unité centrale 3 recherche les lignes de la matrice modale Φ (tronquée aux modes discriminants) de la peau qui sont colinéaires, avec une tolérance prédéfinie, à l'estimation *X̂_{F}* des contributions *X_{F}* des modes de vibration de la peau P.

De manière connue, on sait que chaque ligne de la matrice modale Φ de la peau P est associée à un unique point de la peau P et que l'on peut retrouver le point d'impact *F* de façon unique en cherchant la seule ligne colinéaire à la contribution *X_{F}* des modes de vibration de la peau P. Dans le cas d'une estimation *X̂_{F}* des contributions *X_{F}* des modes de vibration de la peau P, on recherche les lignes colinéaires, dans une tolérance prédéfinie, qui permet de localiser plusieurs points candidats, dit point candidats *F*cand, proches du point d'impact *F*.

Ainsi, à l'étape E6, l'unité centrale 3 détermine les coordonnées d'au moins un point candidat Fcand. Dans l'exemple illustré sur la figure, la mise en œuvre de l'étape E6 de localisation donne trois points candidats *F*cand, tous regroupés autour du point d'impact *F*.

Dans une étape E6', optionnelle, de confirmation, mise en œuvre après l'étape E6 de localisation du point d'impact *F*, l'unité centrale 3 compare les coordonnées des points d'impacts candidats Fcand avec les coordonnées de la zone Z définie à l'étape E2 de localisation de zone d'impact. Un point candidat *F*cand dont les coordonnées ne se trouvent pas dans la zone d'impact n'est pas considéré dans la suite du procédé.

Enfin, dans une étape E7 d'estimation de l'énergie de l'impact, l'unité centrale 3 estime en premier lieu l'intensité I de l'impact pour chaque point candidat Fcand. L'estimation Îde l'intensité I de l'impact au niveau d'un point candidat Fcand est obtenue en calculant un coefficient de colinéarité entre la ligne de la matrice modale Φ associée au point candidat Fcand et l'estimation *X̂_{F}* du vecteur de participation modale. Pour chaque point candidat Fcand, l'unité centrale 3 calcule une force d'impact avec les paramètres (*T̂*, *Î*) et l'accélération au point candidat Fcand avec les paramètres (*T̂, Î, X̂_{F}*). L'unité centrale 3 intègre deux fois l'accélération de Fcand pour obtenir le déplacement. L'énergie d'impact E associée à un point candidat Fcand est estimée en intégrant le produit de la force par le déplacement sur la durée des mesures vibratoires.

La dernière étape du procédé, est une étape E8 d'alerte dans laquelle l'unité centrale 5 émet un signal d'alerte *Salert* à destination des opérateurs de l'aéronef dans le cas où l'estimation Ê de l'énergie d'impact à un point candidat *F*cand calculée à l'étape E7 précédente est supérieure à un seuil prédéterminé G. Le signal d'alerte *Salert* contient les données sur l'estimation Ê de l'énergie d'impact et la position du point candidat Fcand. Le procédé reboucle à l'étape E1 de comparaison suite à l'étape E8 d'alerte.

Le procédé tel que décrit ci-dessus est mis en œuvre, par exemple, lorsque l'aéronef A est mis hors tension ou lorsque l'aéronef A est mis sous-tension jusqu'au premier démarrage du moteur et cinq minutes après l'arrêt des moteurs

Un aéronef A selon l'invention peut procéder, de manière automatique et en temps réel, à un autodiagnostic pour estimer les paramètres d'un impact. Les paramètres estimés sont fournis aux opérateurs de l'aéronef pour lancer, si nécessaire, des opérations de maintenance de l'aéronef A en cas d'endommagement de la peau suite à l'impact.

Le procédé a été décrit en partant de l'hypothèse que la forme d'impact est représentée par un demi-sinus. D'autres formes d'impacts et/ou lois d'impacts, qui déterminent les paramètres d'impact, peuvent être utilisées.

Le procédé a été décrit pour un premier ensemble de capteurs 4 qui comprend un unique capteur 4a. Dans le cas où le premier ensemble de capteurs 5 contient plusieurs capteurs, l'unité centrale 3 effectue les étapes E4 à E7 pour chaque capteur 5a du premier ensemble et :
- retient les résultats du capteur 4a du premier ensemble de capteurs qui fait les meilleures prédictions de mesures (c.-à-d. le capteur dont les prédictions donnent le plus petit résidu dans la méthode des moindre carrés) ; ou
- combine les mesures de chaque capteur 4a et minimise la totalité des écarts prédiction-mesures de tous les capteurs 4a du premier ensemble de capteurs 4.

Selon une variante de l'invention, non illustrée sur les figures, l'unité centrale 3 comprend une base de données dans laquelle sont inscrites des propriétés intrinsèques l'aéronef (âge, réparations effectuées, déformations connues de la peau) afin d'adapter, spécifiquement à l'aéronef, le procédé d'estimation tel que décrit ci-dessus. Les propriétés inscrites dans la base de données permettent, par exemple, d'affiner le modèle mathématique de réponse des capteurs du premier ensemble 5 à des excitations.

En variante, la base de données comprend un historique des paramètres d'impact estimés antérieurement par le système d'estimation des paramètres d'un impact, ainsi que pour chaque estimation mise en œuvre, les coordonnées réelles du point d'impact tel que détecté visuellement par des opérateurs. L'unité centrale 3, par la mise en œuvre d'un algorithme d'apprentissage, peut affiner l'algorithme mis en œuvre dans le procédé tel que décrit ci-dessus pour diminuer l'écart de position entre les points d'impacts candidats *F*cand déterminés et le point d'impact *F* suite à un impact.

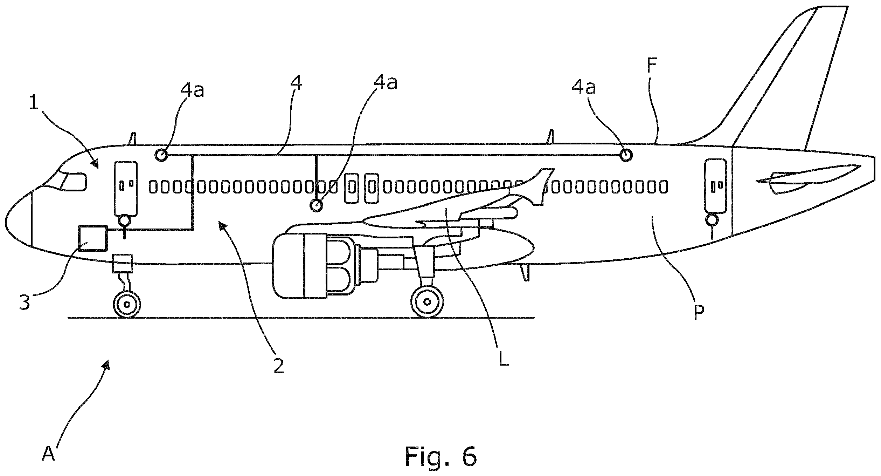

Le système d'estimation des paramètres d'un impact 1 a été décrit pour un réseau de capteurs 2 qui comprend un premier ensemble de capteurs 4 et un second ensemble de capteurs 5 assistant le premier ensemble 4 de capteur dans la détermination de l'instant d'impact *t*₀. En variante, et en relation avec la figure 6, le système d'estimation des paramètres d'un impact 1 ne comprend pas de second ensemble de capteurs 5 pour assister le premier ensemble de capteurs 4 dans la détermination de l'instant d'impact. Le procédé d'estimation des paramètres d'un impact 1 mis en œuvre par le système d'estimation des paramètres d'un impact 1 selon cette variante est identique au procédé tel que décrit plus haut, à ceci près que seuls les signaux du premier ensemble de capteurs 5a sont prises en compte dans les étapes du procédé. Cette variante s'applique à des aéronefs de petite taille pour lesquels l'instant d'impact et l'instant des mesures vibratoires se confondent. L'avantage est d'utiliser moins de capteurs et d'identifier plus rapidement l'impact.

Bien que décrit pour un aéronef A, le principe d'estimation des paramètres d'un impact tel que décrit trouvera application à tout type de véhicule ou structure susceptible de subir des impacts.

## Revendications

1. Aéronef (A) comprenant une peau (P) formant une surface externe de l'aéronef, l'aéronef (A) étant équipé d'un système d'estimation des paramètres d'un d'impact (1) comprenant un réseau de capteurs (2) fixés à la peau (P) et une unité centrale (3) connectée audit réseau et configurée pour évaluer les paramètres (*F*, I, *T*) d'un impact, lesdits paramètres comprenant au moins la position (*F*) du point d'impact, l'intensité (I) et la durée (T) de l'impact, le réseau de capteur (2) comprenant un premier ensemble de capteurs (4) fournissant des données relatives aux ondes élastiques, les capteurs (4a) du premier ensemble de capteurs (4) étant situés à des points neutres de la peau (P) de l'aéronef (A) relativement aux modes propres vibratoires discriminants de ladite peau (P), l'unité centrale (3) évalue les paramètres (*F*, I, *T*) d'un impact à partir des données du réseau de capteurs (2) et d'un modèle de réponse de la peau à des excitations extérieures calculé à partir des propriétés modales de la peau (P).

2. Aéronef (A) selon la revendication 1, **caractérisé en ce que** les capteurs (4a) du premier ensemble de capteurs (4) sont des accéléromètres.

3. Aéronef (A) selon l'une quelconque des revendications 1 à 2, **caractérisé en ce que** le réseau de capteurs (2) comprend un second ensemble de capteurs (5) fournissant des données relatives à la détection temporelle d'un instant impact (*t*₀)

4. Aéronef (A) selon la revendication 3, **caractérisé en ce que** les capteurs (5a) du second ensemble de capteurs (5) sont situés dans des zones de l'aéronef (A) les plus touchées statistiquement par des impacts.

5. Aéronef (A) selon l'une quelconque des revendications 3 à 4, **caractérisé en ce que** les capteurs (5a) du second ensemble de capteurs (5) sont des capteurs pris parmi les types de capteurs suivants : microphone, capteur piézoélectrique.

6. Procédé d'estimation des paramètres d'un impact sur la peau (P) d'un aéronef (A), l'aéronef (A) étant équipé d'un système d'estimation des paramètres d'un d'impact (1) comprenant un réseau de capteurs (2) fixés à la peau (P) et une unité centrale (3) connectée audit réseau et configurée pour évaluer les paramètres (*F*, I, *T*) d'un impact, les dits paramètres comprenant au moins la position (*F*) du point d'impact, l'intensité (I) et la durée (*T*) de l'impact, le réseau de capteur (2) comprenant un premier ensemble de capteurs (4) fournissant des données relatives aux ondes élastiques, les capteurs (4a) du premier ensemble de capteurs (4) étant situés à des points neutres de la peau (P) de l'aéronef (A) relativement aux modes propres vibratoires discriminants de ladite peau (P) et l'unité centrale (3) évaluant les paramètres (*F*, I, *T*) d'un impact à partir des données du réseau de capteurs (2) et d'un modèle de réponse de la peau à des excitations extérieures calculé à partir des propriétés modales de la peau (P), le procédé comprenant les étapes suivantes:
- une étape (E1) de comparaison dans laquelle l'unité centrale (3) reçoit les signaux (*S*4*a*, *S*5*a*1, ..., *S*5*a*3) de chacun des capteurs (4a,5a1,..., 5a3) du réseau de capteur (2) et compare l'amplitude de chacun desdits signaux a un seuil prédéterminé (K) caractérisant un évènement anormal ;
- une étape (E2) de localisation de zone d'impact, mise en œuvre si un des signaux des capteurs (4a,5a1,..., 5a3) du réseau de capteur (2) a une amplitude qui dépasse le seuil prédéterminé (K), et dans laquelle l'unité centrale (3) détermine une zone (Z) de la peau (P) dans laquelle a eu lieu un impact d'un élément extérieur à l'aéronef (A) avec la peau (P);
- une étape (E3) de détermination, simultanée à l'étape (E2) de localisation de zone d'impact, dans laquelle l'unité centrale (3) détermine, à partir des signaux des capteurs (4a,5a1,..., 5a3) du réseau de capteur (2), un instant d'impact *t*₀ correspondant à l'instant du contact de l'élément extérieur à l'aéronef (A) avec la peau (P) ;
- un étape (E4) de traitement des mesures vibratoires, dans laquelle l'unité centrale (3) reçoit le signal d'un capteur (5a) du premier ensemble de capteurs (5) à partir d'un temps postérieur à l'instant d'impact (*t*₀) et pendant à une durée prédéterminée ;
- un étape (E5) d'optimisation dans laquelle l'unité centrale (3) calcule une estimation (*T̂*) d'une durée d'impact (*T*) et une estimation (*X̂_{F}*) des contributions (*X_{F}*) de modes de vibration de la peau, lesdites estimations étant calculées à partir des signaux du capteur (5a) du premier ensemble de capteurs (5) traités à l'étape (E4) précédentes et à partir d'un modèle mathématique de réponse du capteur du premier ensemble à des excitations quelconques ;
- une étape (E6) de localisation de point d'impact (*F*) dans laquelle l'unité centrale (3) détermine les coordonnées d'un point d'impact estimé, dit point d'impact candidat (*F*cand), à partir d'une recherche de colinéarité entre les lignes d'une matrice modale (Φ) de la peau (P) et l'estimation (*X̂_{F}*) des contributions de modes de vibration de la peau ;
- une étape (E7) d'estimation de l'énergie de l'impact, dans laquelle l'unité centrale (3) estime l'énergie d'impact (E) au niveau de chaque point d'impact candidat (*F*cand) à partir d'une estimation de l'intensité d'impact (I), de l'estimation (*T̂*) de la durée (T) d'impact et de l'estimation (*X̂_{F}*) des contributions (*X_{F}*) de modes de vibration de la peau ;
- une étape (E8) d'alerte, dans laquelle l'unité centrale (3), émet un signal d'alerte (*Salert*) si l'estimation (*Ê*) de l'énergie de l'impact à un point candidat (*F*cand) est supérieure à un seuil prédéterminé (G).

7. Procédé selon la revendication 6, **caractérisé en ce que** la zone (Z) déterminée à l'étape (E2) de localisation de zone d'impact est centrée sur un capteur ayant émis un signal (*S*4*a*3) dont l'amplitude dépasse le seuil prédéterminé (G).

8. Procédé selon la revendication 7, **caractérisé en ce que** l'étape (E1) de comparaison est effectuée à intervalles de temps (*Int*_{0...*m*}) réguliers et successifs.

9. Procédé selon l'une quelconque des revendications 6 à 8, **caractérisé en ce que** suite à l'étape (E6) de localisation de point d'impact et préalablement à l'étape E7 d'estimation de l'énergie de l'impact, l'unité centrale (3) met en œuvre une étape (E6') de confirmation dans laquelle l'unité centrale (3) compare les coordonnées des points d'impacts candidats (*F*cand) avec les coordonnées de la zone (Z) définie à l'étape (E2) de localisation de zone d'impact.

## Patentansprüche

1. Flugzeug (A), das eine Haut (P) besitzt, die eine äußere Oberfläche des Flugzeugs bildet, wobei das Flugzeug (A) mit einem System (1) für die Schätzung von Parametern eines Stoßes ausgerüstet ist, das ein Netz (2) von Sensoren, die an der Haut (P) befestigt sind, und eine Zentraleinheit (3), die mit dem Netz verbunden ist und konfiguriert ist, die Parameter (F, I, T) eines Stoßes zu bewerten, umfasst, wobei die Parameter wenigstens die Position (F) eines Stoßpunkts, die Intensität (I) und die Dauer (T) des Stoßes umfassen, wobei das Sensornetz (2) eine erste Gesamtheit von Sensoren (4) umfasst, die Daten bezüglich elastischer Wellen liefern, wobei sich die Sensoren (4a) der ersten Sensorgesamtheit (4) an Neutralpunkten der Haut (P) des Flugzeugs (A) in Bezug auf diskriminierende Eigenschwingungsmoden der Haut (P) befinden, wobei die Zentraleinheit (3) die Parameter (F, I, T) eines Stoßes anhand der Daten des Sensornetzes (2) und eines Modells der Antwort der Haut auf äußere Erregungen, das anhand der Schwingungseigenschaften der Haut (P) berechnet wird, bewertet.

2. Flugzeug (A) nach Anspruch 1, **dadurch gekennzeichnet, dass** die Sensoren (4a) der ersten Sensorgesamtheit (4) Beschleunigungsmesser sind.

3. Flugzeug (A) nach einem der Ansprüche 1 bis 2, **dadurch gekennzeichnet, dass** das Sensornetz (2) eine zweite Gesamtheit (5) von Sensoren umfasst, die Daten bezüglich der zeitlichen Detektion eines Stoßzeitpunkts (t₀) liefern.

4. Flugzeug (A) nach Anspruch 3, **dadurch gekennzeichnet, dass** sich die Sensoren (5a) der zweiten Sensorgesamtheit (5) in Zonen des Flugzeugs (A) befinden, die von Stößen statistisch am stärksten getroffen werden.

5. Flugzeug (A) nach einem der Ansprüche 3 bis 4, **dadurch gekennzeichnet, dass** die Sensoren (5a) der zweiten Sensorgesamtheit (5) Sensoren sind, die unter den folgenden Sensortypen gewählt sind: Mikrofon und piezoelektrischer Sensor.

6. Verfahren zum Schätzen von Parametern eines Stoßes auf die Haut (P) eines Flugzeugs (A), wobei das Flugzeug (A) mit einem System zum Schätzen von Parametern eines Stoßes (1) ausgerüstet ist, das ein Netz (2) von Sensoren, die an der Haut (P) befestigt sind, und eine Zentraleinheit (3), die mit dem Netz verbunden ist und konfiguriert ist, die Parameter (F, I, T) eines Stoßes zu bewerten, umfasst, wobei die Parameter wenigstens die Position (F) eines Stoßpunkts, die Intensität (I) und die Dauer (T) des Stoßes umfassen, wobei das Sensornetz (2) eine erste Gesamtheit (4) von Sensoren umfasst, die Daten bezüglich elastischer Wellen liefern, wobei sich die Sensoren (4a) der ersten Sensorgesamtheit (4) an Neutralpunkten der Haut (P) des Flugzeugs (A) bezüglich diskriminierender Eigenschwingungen der Haut (P) befinden und wobei die Zentraleinheit (3) die Parameter (F, I, T) eines Stoßes anhand der Daten des Sensornetzes (2) und eines Modells der Antwort der Haut auf äußere Erregungen, das anhand der Schwingungseigenschaften der Haut (P) berechnet wird, bewertet, wobei das Verfahren die folgenden Schritte umfasst:
- einen Schritt (E1) des Vergleichens, in dem die Zentraleinheit (3) die Signale (S4a, S5a1, ..., S5a3) von jedem der Sensoren (4a, 5a1, ..., 5a3) des Sensornetzes (2) empfängt und die Amplitude jedes der Signale mit einem vorgegebenen Schwellenwert (K), der ein anomales Ereignis bezeichnet, vergleicht;
- einen Schritt (E2) des Lokalisierens der Stoßzone, der ausgeführt wird, falls eines der Signale der Sensoren (4a, 5a1, ..., 5a3) des Sensornetzes (2) eine Amplitude besitzt, die den vorgegebenen Schwellenwert (K) überschreitet, wobei die Zentraleinheit (3) eine Zone (Z) der Haut (P) bestimmt, in der ein Stoß eines bezüglich des Flugzeugs (A) äußeren Elements auf die Haut (P) stattgefunden hat;
- einen Schritt (E3) des Bestimmens gleichzeitig mit dem Schritt (E2) des Lokalisierens der Stoßzone, in dem die Zentraleinheit (3) anhand der Signale der Sensoren (4a, 5a1, ..., 5a3) des Sensornetzes (2) einen Stoßzeitpunkt t₀ bestimmt, der dem Zeitpunkt des Kontakts des bezüglich des Flugzeugs (A) äußeren Elements mit der Haut (P) entspricht;
- einen Schritt (E4) des Verarbeitens von Schwingungsmessungen, in dem die Zentraleinheit (3) das Signal eines Sensors (5a) der ersten Sensorgesamtheit (5) ab einer Zeit nach dem Stoßzeitpunkt (t₀) und während einer vorgegebenen Dauer empfängt;
- einen Schritt (E5) des Optimierens, in dem die Zentraleinheit (3) eine Schätzung (T̂) einer Stoßdauer (T) und eine Schätzung (X̂_{F}) von Beiträgen (X_{F}) von Schwingungsmoden der Haut berechnet, wobei die Schätzungen anhand der Signale des Sensors (5a) der ersten Sensorgesamtheit (5), die im vorhergehenden Schritt (E4) verarbeitet werden, und anhand eines mathematischen Modells der Antwort des Sensors der ersten Gesamtheit auf beliebige Erregungen berechnet werden;
- einen Schritt (E6) des Lokalisierens des Stoßpunkts (F), in dem die Zentraleinheit (3) die Koordinaten eines geschätzten Stoßpunkts, der Kandidatenstoß (Fcand) genannt wird, anhand einer Suche der Kolinearität zwischen den Zeilen einer Modalmatrix (Φ) der Haut (P) und der Schätzung (X̂_{F}) der Beiträge der Schwingungsmoden der Haut bestimmt;
- einen Schritt (E7) des Schätzens der Stoßenergie, in dem die Zentraleinheit (3) die Stoßenergie (E) auf Höhe jedes Kandidatenstoßpunkts (Fcand) anhand einer Schätzung der Stoßintensität (I), der Schätzung (T̂) der Dauer (T) des Stoßes und der Schätzung (X̂_{F}) der Beiträge (X_{F}) der Schwingungsmoden der Haut schätzt;
- einen Schritt (E8) des Warnens, in dem die Zentraleinheit (3) ein Warnsignal (Salert) aussendet, falls die Schätzung (Ê) der Energie des Stoßes an einem Kandidatenpunkt (Fcand) größer als ein vorgegebener Schwellenwert (G) ist.

7. Verfahren nach Anspruch 6, **dadurch gekennzeichnet, dass** die Zone (Z), die im Schritt (E2) des Lokalisierens der Stoßzone bestimmt wird, auf einen Sensor zentriert ist, der ein Signal (S4a3) ausgesendet hat, dessen Amplitude den vorgegebenen Schwellenwert (G) überschreitet.

8. Verfahren nach Anspruch 7, **dadurch gekennzeichnet, dass** der Schritt (E1) des Vergleichens in regelmäßigen und aufeinander folgenden Zeitintervallen (Int_{0...m}) ausgeführt wird.

9. Verfahren nach einem der Ansprüche 6 bis 8, **dadurch gekennzeichnet, dass** nach dem Schritt (E6) des Lokalisierens des Stoßpunkts und vor dem Schritt (E7) des Schätzens der Stoßenergie die Zentraleinheit (3) einen Schritt (E6') des Bestätigens ausführt, in dem die Zentraleinheit (3) die Koordinaten der Kandidatenstoßpunkte (Fcand) mit den Koordinaten der Zone (Z), die im Schritt (E2) des Lokalisierens der Stoßzone definiert wird, vergleicht.

## Claims

1. Aircraft (A) comprising a skin (P) forming an outer surface of the aircraft, the aircraft (A) being equipped with a system for estimating the parameters of an impact (1) comprising an array of sensors (2) attached to the skin (P) and a central processing unit (3) connected to said array and configured for assessing the parameters (*F*, I, *T*) of an impact, said parameters comprising at least the position (*F*) of the point of impact, the intensity (I) and the duration (*T*) of the impact, the sensor array (2) comprising a first set of sensors (4) providing data relating to the elastic waves, the sensors (4a) of the first set of sensors (4) being located at neutral points of the skin (P) of the aircraft (A) relative to the discriminant vibration eigenmodes of said skin (P), the central processing unit (3) assessing the parameters (*F*, I, *T*) of an impact from the data of the array of sensors (2) and a response model of the skin to external excitations calculated from the modal properties of the skin (P) .

2. Aircraft (A) according to Claim 1, **characterized in that** the sensors (4a) of the first set of sensors (4) are accelerometers.

3. Aircraft (A) according to either of Claims 1 and 2, **characterized in that** the array of sensors (2) comprises a second set of sensors (5) providing data relating to the temporal detection of an impact instant (*t*₀).

4. Aircraft (A) according to Claim 3, **characterized in that** the sensors (5a) of the second set of sensors (5) are located in areas of the aircraft (A) statistically the most affected by impacts.

5. Aircraft (A) according to any one of Claims 3 and 4, **characterized in that** the sensors (5a) of the second set of sensors (5) are sensors taken from the following types of sensors: microphone, piezoelectric sensor.

6. Method for estimating the parameters of an impact on the skin (P) of an aircraft (A), the aircraft (A) being equipped with a system for estimating the parameters of an impact (1) comprising an array of sensors (2) attached to the skin (P) and a central processing unit (3) connected to said array and configured for assessing the parameters *(F*, I, *T)* of an impact, said parameters comprising at least the position (*F*) of the point of impact, the intensity (I) and the duration (*T*) of the impact, the sensor array (2) comprising a first set of sensors (4) providing data relating to the elastic waves, the sensors (4a) of the first set of sensors (4) being located at neutral points of the skin (P) of the aircraft (A) relative to the discriminant vibration eigenmodes of said skin (P), and the central processing unit (3) assessing the parameters *(F,* I, *T)* of an impact from the data of the array of sensors (2) and a response model of the skin to external excitations calculated from the modal properties of the skin (P), the method comprising the following steps:
- a step (E1) of comparing in which the central processing unit (3) receives the signals (S4a, *S*5*a*1, ..., *S*5*a*3) from each of the sensors (4a, 5a1, ..., 5a3) of the sensor array (2) and compares the amplitude of each of said signals to a predetermined threshold (K) characterizing an abnormal event;
- a step (E2) of locating an impact area, implemented if one of the signals from the sensors (4a, 5a1, ..., 5a3) of the sensor array (2) has an amplitude which exceeds the predetermined threshold (K), and in which the central processing unit (3) determines an area (Z) of the skin (P) in which an impact has taken place of an element external to the aircraft (A) with the skin (P);
- a step (E3) of determining, simultaneously with step (E2) of locating an impact area, in which the central processing unit (3) determines, from the signals of the sensors (4a, 5a1, ..., 5a3) of the sensor array (2), an instant of impact *t*₀ corresponding to the instant of the contact of the element external to the aircraft (A) with the skin (P) ;
- a step (E4) of processing the vibration measurements, in which the central processing unit (3) receives the signal from a sensor (5a) of the first set of sensors (5) from a time subsequent to the instant of impact (*t*₀) and for a predetermined duration;
- a step (E5) of optimizing in which the central processing unit (3) calculates an estimate (*T̂*) of a duration of impact (*T*) and an estimate (*X̂_{F}*) of the contributions (*X_{F}*) of vibration modes of the skin, said estimates being calculated from the signals of the sensor (5a) of the first set of sensors (5) processed in the preceding step (E4) and from a mathematical response model of the sensor of the first set to any excitations;
- a step (E6) of locating a point of impact (F) in which the central processing unit (3) determines the coordinates of an estimated point of impact, termed a "candidate point of impact" (*F*cand), from a collinearity search among the rows of a modal matrix (Φ) of the skin (P) and the estimate (*X̂_{F}*) of the contributions of vibration modes of the skin;
- a step (E7) of estimating the energy of the impact, in which the central processing unit (3) estimates the impact energy (E) at each candidate point of impact (*F*cand) from an estimate of the impact intensity (I), the estimate (*T̂*) of the duration of impact (*T*) and the estimate (*X̂_{F}*) of the contributions (*X_{F}*) of vibration modes of the skin;
- a step (E8) of warning, in which the central processing unit (3) transmits a warning signal (*Salert*) if the estimate (*Ê*) of the energy of the impact at a candidate point (Fcand) is greater than a predetermined threshold (G).

7. Method according to Claim 6, **characterized in that** the area (Z) determined in step (E2) of locating an impact area is centred on a sensor having transmitted a signal (S4a3) whereof the amplitude exceeds the predetermined threshold (G).

8. Method according to Claim 7, **characterized in that** the step (E1) of comparing is performed at regular and successive time intervals (*Int*_{0...*m*}).

9. Method according to any one of Claims 6 to 8, **characterized in that** following the step (E6) of locating a point of impact and prior to step E7 of estimating the energy of the impact, the central processing unit (3) implements a step (E6') of confirmation in which the central processing unit (3) compares the coordinates of the candidate points of impact (Fcand) with the coordinates of the area (Z) defined in step (E2) of locating an impact area.
